# EUROPEAN PATENT APPLICATION

(11) **EP 3 040 841 A1**
(43) Date of publication of application: **06.07.2016**
(21) Application number: 14840965.9
(22) Date of filing: 19.02.2014
(51) Int. Cl.: G06F 3/0488

(54) **ELECTRONIC DEVICE AND RESOURCE DISPLAY METHOD**

(30) Priority: 30.08.2013 CN 201310389864
(71) Applicant: Xiaomi Inc., Beijing 100085 (CN)
(72) Inventor: WANG, Chuan, Beijing 100085 (CN); SHEN, Xijie, Beijing 100085 (CN); CHENG, Zhaopeng, Beijing 100085 (CN); SUN, Yongjian, Beijing 100085 (CN); LI, Chuangqi, Beijing 100085 (CN); WAN, Jun, Beijing 100085 (CN); RU, Yi, Beijing 100085 (CN); LI, Feng, Beijing 100085 (CN); YAN, Xing, Beijing 100085 (CN); DAI, Qingsong, Beijing 100085 (CN)
(74) Representative: Delumeau, François Guy
(86) International application number: PCT/CN2014/072227
(87) International publication number: WO 2015/027688

(57) **Abstract**

An electronic device and a resource display method, said electronic device comprising: at least one hardware interface (120), a control chip (140), and a display screen (160); the at least one hardware interface (120) is used for connecting to a same or different signal sources, each signal source being used for providing at least one application resource by means of a hardware interface; the control chip (140) is used for classifying the at least one application resource provided by each hardware interface, and generating main interface display signals containing several card fields arranged according to a predetermined layout; the display screen (160) is used for displaying the main interface according to the display signals. The present invention solves the problem in smart television of low utilization rates for auxiliary applications other than television; the invention is such that the operation level required by an application resource is the same in different card fields and the utilization rates of every type of application resource are relatively even.

## Description

### CROSS-REFERENCE TO RELATED APPLICATIONS

This application is based on and claims priority from Chinese Patent Application No. 201310389864.2, filed on August 30, 2013, the entire contents of which are incorporated herein by reference.

### TECHNICAL FIELD

The present disclosure relates to the field of the electronic technology, and more particularly, to an electronic device and a method for displaying resources.

### BACKGROUND

As the most common household appliances, televisions (TVs) have become increasingly intelligent and multifunctional owing to the development of the electronics and information technology.

In a smart TV loaded with an operating system, in addition to an ordinary TV application provided for users to watch TV programs, there are other auxiliary applications provided for users to view micro blog, check on weather, play games and browse webpages and the like. Meanwhile, the smart TV may also expand and upgrade the auxiliary applications by downloading and installing third-party applications. Specifically, after turning on the smart TV, the user may directly watch TV programs and switch between channels with the smart TV just like with an ordinary TV. In addition to that, the user may select and enter one of the auxiliary applications through a menu on the smart TV.

In a process to practice the present disclosure, the inventors have found that there are at least the following problems in the background technology: except for the TV application, the other auxiliary applications are all provided through a menu on the smart TV, thereby there are too many operation levels to go through to reach a certain auxiliary application. In this case, many users do not know about there are some auxiliary applications in their smart TVs long after they purchased them, and some users rarely or never use these auxiliary applications even though they know about them due to too many levels of menu, which results in rather low utilization rates of these auxiliary applications.

### SUMMARY

In order to solve the problem that except for the TV application, other auxiliary applications are all provided through a menu on the smart TV and thus there are too many operation levels to go through to reach a certain auxiliary application, which results in rather low utilization rates of the applications except for the TV application, the embodiments of the present disclosure provide an electronic device and a method for displaying resources. The solutions are as follows.

According to a first aspect of the embodiments of the present disclosure, there is provided an electronic device. The electronic device includes:
at least one hardware interface, a control chip electrically connected to the at least one hardware interface and a display screen electrically connected to the control chip;
the at least one hardware interface is configured to be connected to the same or different signal sources respectively, and each of the signal sources is configured to provide at least one type of application resources through the hardware interface;
the control chip is configured to classify and integrate the at least one type of application resources provided through the respective hardware interface, and generate a display signal for a main interface including a number of card-shaped areas arranged according to a predetermined layout, in which each card-shaped area corresponds to a same type of thee classified and integrated application resources, and different card-shaped areas correspond to different types of the classified and integrated application resources;
the display screen is configured to display the main interface according to the display signal.

In one embodiment, the control chip is configured to:
classify the application resources provided through a TV interface into one type of application resources when the hardware interface includes the TV interface;
classify the application resources provided through at least one interface of an HDMI interface, an S-Video interface, an AV interface, a VGA interface, a DVI interface, a DP interface and a USB interface respectively into one type of application resources, or classify the application resources provided through at least one interface of the HDMI interface, the S-Video interface, the AV interface, the VGA interface, the DVI interface, the DP interface and the USB interface all into one type of application resources, when the hardware interface includes at least one of the HDMI interface, the S-Video interface, the AV interface, the VGA interface, the DVI interface, the DP interface and the USB interface; and
classify the application resources provided through a network interface into at least one type of application resources on basis of application type when the hardware interface includes the network interface,
wherein the types of the application resources include at least one type of TV application resources, local playback application resources, online movie and video application resources, game application resources, theme application resources, picture application resources, music application resources, system application resources, customized application resources running through a preset application interface, and third-party application resources running through a preset third-party application interface.

In one embodiment, the control chip is configured:
when an application resource to which one card-shaped area corresponds exists, to determine contents to be displayed in this card-shaped area according to the application resource, in which the contents to be displayed include at least one type of poster pictures, contents, introduction information and updated information of the application resources;
when an application resource to which one card-shaped area corresponds does not exist but a hardware interface to which this application resource corresponds is connected to a signal source, to determine contents to be displayed in this card-shaped area according to the signal source, in which the contents to be displayed include at least one of a connection status of the signal source, descriptive information of the signal source, a device type of the signal source, a device name of the signal source and an operating status of the signal source; and
when an application resource to which one card-shaped area corresponds does not exist and a hardware interface to which this card-shaped area corresponds is not connected to a signal source, to determine contents to be displayed in this card-shaped area according to the hardware interface, in which the contents to be displayed include at least one of an interface type of the hardware interface and an unconnected status of the hardware interface.

In one embodiment, the control chip is also configured to receive a selection signal corresponding to a card-shaped area in the main interface, and generate a second display signal according to the application resources to which the card-shaped area selected according to the selection signal corresponds; and
the display screen is also configured to switch the main interface display a sub-level contents to which the card-shaped area corresponds according to the second display signal, in which the sub-level contents include the application resources to which the card-shaped area corresponds, a list of the application resources to which the card-shaped area corresponds, or detailed information of the resource signal source to which the card-shaped area corresponds.

In one embodiment, the control chip is also configured to receive a return signal corresponding to the sub-level contents to which the card-shaped area corresponds, and according to the return signal, generate again a display signal for the main interface including a number of card-shaped areas arranged according to a predetermined layout; and
the display screen is configured to switch the sub-level contents to which the card-shaped area corresponds to the main interface and display the main interface according to the display signal.

In one embodiment, the control chip is also configured, when there are more than one page of card-shaped areas included in the main interface, to receive a replace signal corresponding to the main interface, and generate a third display signal as a display signal for the main interface in which all or a part of the card-shaped areas has been replaced according to the replace signal; and
the display screen is also configured to display the main interface in which all or a part of the card-shaped areas has been replaced according to the third display signal;
wherein the replace signal is a page flip signal or a slide signal.

In one embodiment, the signal source includes at least one type of a TV cable, a high-definition player, a jukebox, a set-top box, a DVD/VCD, a computer, a tablet computer, a U disk and a game console.

According to a second aspect of the embodiments of the present disclosure, there is provided a method for displaying resources, which is applied to the electronic device in the above first aspect or various preferred embodiments of the first aspect. The method includes:
connecting to the same or different signal sources through the at least one hardware interface respectively, each signal source providing at least one type of application resources;
classifying and integrating the at least one type of application resources provided through the respective hardware interfaces through the control chip;
generating a display signal for a main interface including a number of card-shaped areas arranged according to a predetermined layout, through the control chip, in which each card-shaped area corresponds to a same type of the classified and integrated application resources, and different card-shaped areas correspond to different types of the classified and integrated application resources; and
displaying the main interface according to the display signal through the display screen.

In one embodiment, the classifying and integrating the at least one type of application resources provided through the respective hardware interfaces through the control chip includes:
classifying the application resource provided through a TV interface into one type of application resources through the control chip when the hardware interface includes the TV interface;
classifying the application resource provided through at least one interface of an HDMI interface, an S-Video interface, an AV interface, a VGA interface, a DVI interface, a DP interface and a USB interface respectively into one type of application resources, or classifying the application resource provided through at least one interface of the HDMI interface, the S-Video interface, the AV interface, the VGA interface, the DVI interface, the DP interface and the USB interface all into one type of application resources through the control chip, when the hardware interface includes at least one of the HDMI interface, the S-Video interface, the AV interface, the VGA interface, the DVI interface, the DP interface and the USB interface;
classifying the application resource provided through a network interface into at least one type of application resources on basis of application type through the control chip when the hardware interface includes the network interface;
wherein, the types of the application resources include at least one type of TV application resources, local playback application resources, online movie and video application resources, game application resources, theme application resources, picture application resources, music application resources, system application resources, customized application resources running through a preset application interface, and third-party application resources running through a preset third-party application interface.

In one embodiment, the generating the display signal for the main interface including a number of card-shaped areas arranged according to the predetermined layout through the control chip includes:
when an application resource to which one card-shaped area corresponds exists, determining contents to be displayed in this card-shaped area according to the application resource through the control chip, in which the contents to be displayed include at least one type of poster pictures, contents, an introduction information and an updated information of the application resource;
when an application resource to which one card-shaped area corresponds does not exist but a hardware interface to which the application resource corresponds is connected to a signal source, determining contents to be displayed in this card-shaped area according to the signal source through the control chip, in which the contents to be displayed include at least one type of a connection status of the signal source, a descriptive information of the signal source, a device type of the signal source, a device name of the signal source and an operating status of the signal source; and
when an application resource to which one card-shaped area corresponds does not exist and a hardware interface to which the card-shaped area corresponds is not connected to a signal source through the control chip, determining contents to be displayed in this card-shaped area according to the hardware interface, in which the contents to be displayed include at least one type of an interface type of the hardware interface and an unconnected status of the hardware interface.

In one embodiment, the method further includes:
receiving a selection signal corresponding to a card-shaped area in the main interface, and generating a second display signal according to the application resources to which the card-shaped area selected according to the selection signal corresponds, through the control chip;
switching the main interface to display a sub-level contents to which the card-shaped area corresponds according to the second display signal through the display screen, in which the sub-level contents include the application resources to which the card-shaped area corresponds, a list of the application resources to which the card-shaped area corresponds, or a detailed information of the signal source to which the card-shaped area corresponds.

In one embodiment, the method further includes:
receiving a return signal corresponding to the sub-level contents to which the card-shaped area corresponds, and according to the return signal, generating again a display signal for the main interface including a number of card-shaped areas arranged according to a predetermined layout, through the control chip; and
switching the sub-level contents to which the card-shaped area corresponds to the main interface and displaying the sub-level contents according to the display signal, through the display screen.

In one embodiment, the method further includes:
receiving a replace signal corresponding to the main interface, and according to the replace signal, generating a third display signal as a display signal for the main interface in which all or a part of the card-shaped areas has been replaced, through the control chip, in the case that there are more than one page of card-shaped areas included in the main interface;
displaying the main interface in which all or a part of the card-shaped areas has been replaced according to the third display signal, through the display screen;
wherein the replace signal is a page flip signal or a slide signal.

In one embodiment, the signal source includes at least one type of a TV cable, a high-definition player, a jukebox, a set-top box, a DVD/VCD, a computer, a tablet computer, a U disk and a game console.

The advantageous effects brought by the embodiments of the present disclosure may be as follows:
in the present disclosure, various types of application resources provided through different hardware interfaces are displayed by classifying and integrating them into different card-shaped areas of the main interface, thereby the following problem is solved, i.e., except for the TV application, other auxiliary applications are all provided through a menu on the smart TV and thus there are too many operation levels to go through to reach a certain auxiliary application, which results in rather low utilization rates of the applications except for the TV application, and the following effect is achieved, i.e., the operation levels required for using different applications in different card-shaped areas are the same, and thus the utilization rates of respective types of application resources are relatively uniform.

It should be understood that both the foregoing general description and the following detailed description are exemplary and explanatory only and are not restrictive of the present disclosure, as claimed.

### BRIEF DESCRIPTION OF THE DRAWINGS

In order to explain the technical solutions in the embodiments of the present disclosure more apparently, a simple introduction to the drawings required for describing the embodiments will be given below. Obviously, the drawings described below only illustrate some embodiments of the present disclosure, and for those skilled in the art, other drawings may be obtained based on these drawings without inventive labor.

The accompanying drawings herein which are incorporated in and constitute a part of the description, illustrate the embodiments according to the present disclosure, and serve to explain the principles of the present disclosure together with the description.
Figure 1 is a schematic structural view showing an electronic device according to an exemplary embodiment;
Figure 2A is a schematic structural view showing an electronic device according to an exemplary embodiment;
Figure 2B is an interface schematic view showing a main interface displayed on the electronic device provided by the embodiment shown in Figure 2A;
Figure 2C is an interface schematic view showing sub-level contents displayed on the electronic device provided by the embodiment shown in Figure 2A;
Figure 2D is an interface schematic view showing a replaced main interface displayed on the electronic device provided by the embodiment shown in Figure 2A;
Figure 2E is an interface schematic view showing another replaced main interface displayed on the electronic device provided by the embodiment shown in Figure 2A;
Figure 3 is a flowchart showing a method for displaying resources according to an exemplary embodiment; and
Figure 4 is a flowchart showing a method for displaying resources according to an exemplary embodiment.

### DETAILED DESCRIPTION

In order to make the purposes, the technical solutions and the advantages of the present disclosure more apparent, the embodiments of the present disclosure will be further described in detail below with reference to the accompanying drawings.

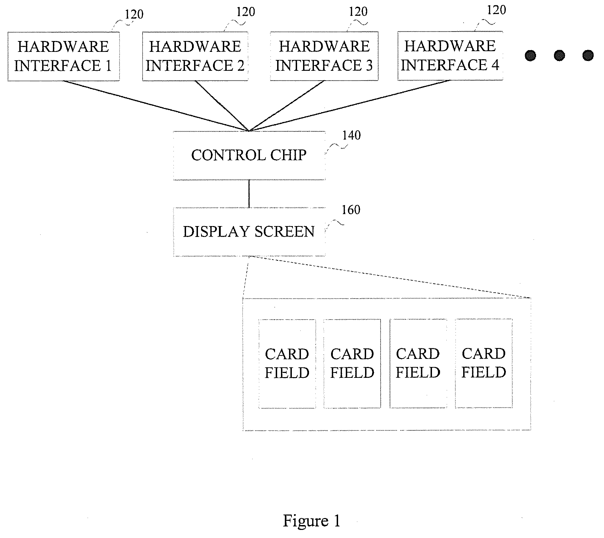

Referring to Figure 1, which illustrates a schematic structural view of an electronic device according to an embodiment of the present disclosure, the electronic device may be a TV, a display, an all-in-one machine or a display platform and the like. The electronic device includes at least one hardware interface 120, a control chip 140 electrically connected to the at least one hardware interface 120 respectively and a display screen 160 electrically connected to the control chip 140.

The at least one hardware interface 120 is configured to be connected to the same or different signal sources respectively. Each of the signal sources is configured to provide at least one type of application resources via the hardware interface 120.

The control chip 140 is configured to classify and integrate the at least one type of application resources provided through the respective hardware interfaces 120, and generate a display signal for a main interface including a number of card-shaped areas arranged according to a predetermined layout. Each card-shaped area corresponds to a same type of the classified and integrated application resources, and different card-shaped areas correspond to different types of the classified and integrated application resources.

The display screen 160 is configured to display the main interface according to the display signal.

In summary, the electronic device provided by the present embodiment displays various types of application resources provided through different hardware interfaces by classifying and integrating them into different card-shaped areas of the main interface. Thereby, the following problem is solved, i.e., except for the TV application, other auxiliary applications are all provided through a menu on the smart TV and thus there are too many operation levels to go through to reach a certain auxiliary application, which results in rather low utilization rates of the applications except for the TV application. Meanwhile, the following effect is achieved, i.e., the operation levels required for using different applications in different card-shaped areas are the same, and thus the utilization rates of respective types of application resources are relatively uniform.

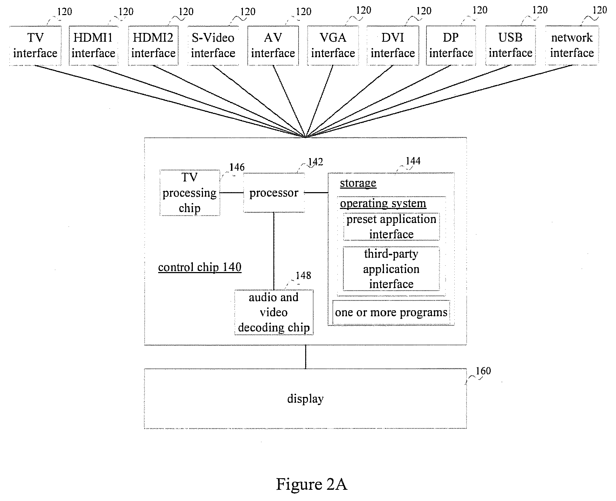

Referring to Figure 2A, which illustrates a schematic structural view of an electronic device according to another embodiment in the present disclosure, this embodiment is described by taking a smart TV as an example of the electronic device. The electronic device includes at least one hardware interface 120, a control chip 140 electrically connected to the at least one hardware interface 120 respectively and a display screen 160 electrically connected to the control chip 140.

The at least one hardware interface 120 is configured to be connected to the same or different signal sources respectively. Each of the signal sources is configured to provide at least one type of application resources via the hardware interface 120.

The hardware interface 120 includes at least one type of a TV (Television) interface, an HDMI (High Definition Multimedia Interface) interface, an S-Video interface, an AV (Audio and Video) interface, a VGA (Video Graphics Array) interface, a DVI (Digital Visual Interface) interface, a DP (Display Port) interface, a USB (Universal Serial Bus) interface and a network interface. The network interface includes at least one type of a WIFI (Wireless Fidelity) wireless network interface, 3GPP (3rd Generation Partnership Project) network interface, an Ethernet wired network interface and an optical network interface. In the present embodiment, since the electronic device is a smart TV, the hardware interface 120 generally include a number of other hardware interfaces in addition to the TV interface and the network interface, and each type of the hardware interfaces 120 may include more than one interface, for example, the HDMI interface shown in the figure includes two interfaces. For ease of description, the electronic device is described as including all the above hardware interfaces for an example.

The signal source connected with the TV interface is generally a TV cable that provides TV application resource to the electronic device through the TV interface.

The signal sources connected with the HDMI interface, the S-Video interface, the AV interface, the VGA interface and the DVI interface are generally any one type of a high-definition player, a jukebox, a set-top box, a DVD/VCD, a computer, a tablet computer and a game console. These signal sources provide local playback resources, such as high-definition movies and music resources.

The signal source connected with the USB interface is generally a U disk, or possibly any one of a high-definition player, a jukebox, a set-top box, a DVD/VCD, a computer, a tablet computer and a game console. These signal sources provide local playback resources.

The signal source connected with the network interface is generally one or more remote servers that generally provide at least one type of the following application resources: online movie and video application resources, game application resources, theme application resources, picture application resources, music application resources, system application resources, customized application resources running through a preset application interface, and third-party application resources running through a preset third-party application interface.

That is, the types of application resources include at least one of the TV application resources, the local playback application resources, the online movie and video application resources, the game application resources, the theme application resources, the picture application resources, the music application resources, the system application resources, the customized application resources running through the preset application interface and the third-party application resources running through the preset third-party application interface.

The control chip 140 generally includes a processor 142 and a storage 144, and optionally includes an auxiliary chip such as a TV processing chip 146, an audio and video decoding chip 148. The storage 144 stores an operating system and one or more programs therein. The operating system provides a preset application interface that is an interface for other vendors to develop customized application resources and a third-party application interface that is an interface opened for third-party researchers to develop third-party application resources.

The control chip 140 is configured to classify and integrate the at least one type of the application resources provided through the respective hardware interfaces 120. Depending on the different hardware interfaces included in the electronic device, the application resources are classified and integrated as follows.

The control chip 140 is configured to classify the application resources provided through the TV interface into one type of application resources when the hardware interface includes the TV interface. For example, the control chip 140 classifies the TV application resources provided through the TV interface into one type of application resources.

Also, the control chip 140 is configured to classify the application resources provided through at least one interface of the HDMI interface, the S-Video interface, the AV interface, the VGA interface, the DVI interface, the DP interface and the USB interface respectively into one type of application resources, or classify the application resources provided through at least one interface of the HDMI interface, the S-Video interface, the AV interface, the VGA interface, the DVI interface, the DP interface and the USB interface all into one type of application resources, when the hardware interface includes at least one of the HDMI interface, the S-Video interface, the AV interface, the VGA interface, the DVI interface, the DP interface and the USB interface. For example, the control chip 140 classifies the different local playback application resources provided through these interfaces into one type of application resources.

Further, the control chip 140 is configured to classify the application resources provided through the network interface into at least one type of application resources on basis of application type when the hardware interface includes the network interface. For example, the control chip 140 classifies the game application resources into one type of application resources, classifies the theme application resources into one type of application resources, classifies the system application resources, the customized application resources running through the preset application interface and the third-party application resources running through the preset third-party application interface into one type of application resources.

Moreover, the control chip 140 is also configured to generate a display signal for the main interface including a number of card-shaped areas arranged according to a predetermined layout, in which each card-shaped area corresponds to a same type of the classified and integrated application resources, and different card-shaped areas correspond to different types of the classified and integrated application resources.

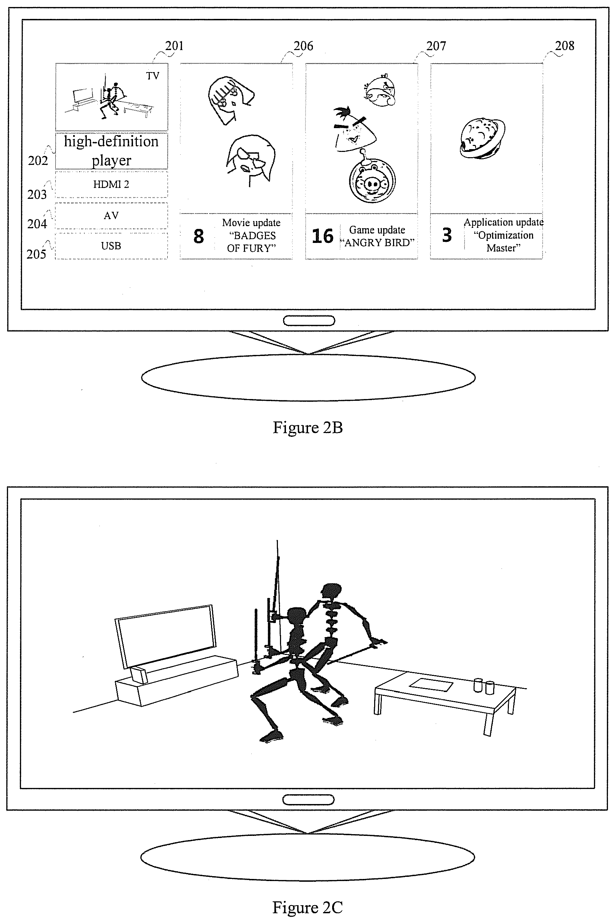

For example, in the main interface shown in Figure 2B, the main interface includes eight card-shaped areas aligned in rows and columns, in which five card-shaped areas are arranged on the far left in column alignment, and the other three card-shaped areas are sequentially arranged in a row on the right side with the top of each of the three card-shaped areas aligned with the top of the first card-shaped area on the far left. The card-shaped area 201 corresponds to the TV application resources, the card-shaped area 202 corresponds to the local playback application resources provided through the HDMI 1 interface, the card-shaped area 203 corresponds to the local playback application resources provided through the HDMI 2 interface, the card-shaped area 204 corresponds to the local playback application resources provided through the AV interface, the card-shaped area 205 corresponds to the local playback application resources provided through the USB interface, the card-shaped area 206 corresponds to the online movie and video application resources provided through the network interface, the card-shaped area 207 corresponds to the game application resources provided through the network interface, and the card-shaped area 208 corresponds to the system application resources, the customized application resources running through the preset application interface and the third-party application resources running through the preset third-party application interface provided through the network interface.

Moreover, the control chip 140 is also configured, when an application resource to which one card-shaped area corresponds exists, to determine contents to be displayed in the card-shaped area according to the application resources. The contents to be displayed include at least one type of poster pictures, contents, introduction information and updated information of the application resources. For example, when the TV interface is connected to a TV cable, and the TV application resource to which the card-shaped area 201 corresponds exists, the control chip 140 determines that the contents to be displayed in the card-shaped area 201 are the contents of the TV application resources, i.e. real time TV pictures. For another example, when the network is connected to a remote server, and the online movie and video application resource to which the card-shaped area 206 corresponds exists, the control chip 140 determines that the contents to be displayed in the card-shaped area 206 include the poster pictures, the introduction information "BADGES OF FURY" and the updated information "8" of the online movie and video application resources.

The control chip 140 is also configured, when an application resource to which one card-shaped area corresponds does not exist but a hardware interface to which the application resource corresponds is connected to a signal source, to determine contents to be displayed in a card-shaped area according to the signal source. The contents to be displayed include at least one of a connection status of the signal source, descriptive information of the signal source, a device type of the signal source, a device name of the signal source and an operating status of the signal source. For example, when the HDMI 1 interface is connected to one high definition player, but there are not any application resources output from the high definition player, the control chip 140 set the transparency of the card-shaped area 202 as zero to indicate that the connection status between the HDMI 1 interface and the high definition player, and displays the device name of the high definition player in the card-shaped area 202.

The control chip 140 is also configured, when an application resource to which one card-shaped area corresponds does not exist and a hardware interface to which the card-shaped area corresponds is not connected to a signal source, to determine contents to be displayed in the card-shaped area according to the hardware interface. The contents to be displayed include at least one of an interface type of the hardware interface and an unconnected status of the hardware interface. For example, when the HDMI 2 interface is not connected to the signal source, the control chip 140 sets the transparency of the card-shaped area 203 as 70% (shown in dotted lines in the figure) to indicate that the HDMI 2 interface is in the unconnected status, and displays the interface type of the HDMI interface in the card-shaped area 203.

The display screen 160 is configured to display the main interface according to the display signal from the control chip 140. The displayed main interface is shown in Figure 2B.

The control chip 140 is also configured to receive a selection signal corresponding to one card-shaped area in the main interface, and generate a second display signal according to the application resources to which the card-shaped area selected according to the selection signal corresponds. The display screen 160 is also configured to switch the main interface to sub-level contents to which the card-shaped area corresponds according to the second display signal. The sub-level contents include the application resources to which the card-shaped area corresponds, a list of the application resources to which the card-shaped area corresponds, or detailed information of the signal source to which the card-shaped area corresponds.

For example, after the control chip 140 receives a selection signal from the user for selecting the card-shaped area 201, since there is only one TV application resource, the display screen 160 directly displays the TV application resource according to the second display signal generated by the control chip 140, as shown in Figure 2C. For another example, after the control chip 140 receives a selection signal from the user for selecting the card-shaped area 206, since there are at least two online movie and video application resources to which the card-shaped area 206 corresponds, the display screen 160 displays a list of the online movie and video application resources according to the second display signal generated by the control chip 140. For still another example, after the control chip 140 receives a selection signal from the user for selecting the card-shaped area 205, since there are a plurality of local playback application resources to which the card-shaped area 205 corresponds, the display screen 160 displays a list of documents in the U disk according to the second display signal generated by the control chip 140.

Certainly, the control chip 140 is also configured to receive a return signal corresponding to the sub-level contents to which the card-shaped area corresponds, and according to the return signal, generate again a display signal for the main interface including a number of card-shaped areas arranged according to a predetermined layout. The display screen 160 is also configured to switch the sub-level contents to which the card-shaped area corresponds to the main interface to display, according to the display signal.

For example, when the displayed contents of the sub-level contents are the TV application resources, if the control chip 140 receives the return signal, the controller chip 140 generates again the display signal for the main interface including a number of card-shaped areas arranged according to a predetermined layout, according to the return signal. The display screen 160 is also configured to switch the sub-level contents to which the card-shaped area corresponds to the main interface to display, according to the display signal. This main interface may be that shown in Figure 2B.

In addition, if there are too many card-shaped areas in the main interface to display all the card-shaped areas in the main interface, that is, there are more than one pages of card-shaped areas included in the main interface, the solution is as follows.

In the case that there are more than one pages of card-shaped areas included in the main interface, the control chip 140 is also configured to receive a replace signal corresponding to the main interface, and according to the replace signal, generate a third display signal which is a display signal for the main interface in which all or a part of the card-shaped areas has been replaced. The replace signal is a page flip signal or a slide signal.

The display screen 160 is also configured to display the main interface in which all or a part of the card-shaped areas has been replaced, according to the third display signal.

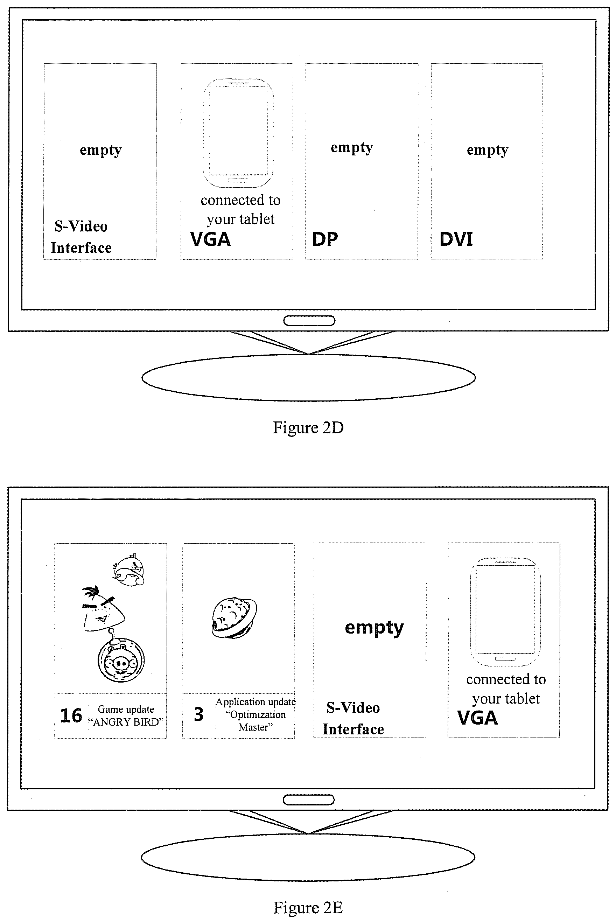

For example, when the replace signal is the page flip signal, the control chip 140 generates the third display signal according to the replace signal, and the display screen 160 displays the main interface in which all of the card-shaped areas have been replaced, according to the third display signal, as shown in Figure 2D. For another example, when the replace signal is the slide signal, the control chip 140 generates the third display signal according to the replace signal, and the display screen 160 displays the main interface in which a part of the card-shaped areas has been replaced, according to the third display signal, as shown in Figure 2E.

In summary, the electronic device provided by the present embodiment displays various types of application resources provided through different hardware interfaces by classifying and integrating them into different card-shaped areas of the main interface. Thereby, the following problem is solved, i.e., except for the TV application, other auxiliary applications are all provided through a menu on the smart TV and thus there are too many operation levels to go through to reach a certain auxiliary application, which results in rather low utilization rates of the applications except for the TV application. Meanwhile, the following effect is achieved, i.e., the operation levels required for using different applications in different card-shaped areas are the same, and thus the utilization rates of respective types of application resources are relatively uniform.

Moreover, the electronic device provided by the present embodiment displays sub-level contents of a card-shaped area in the main interface after the card-shaped area is selected, and always returns to the main interface including a number of card-shaped areas when receiving a return signal in the condition that the sub-level contents are displayed. Thereby, the following effect is achieved, i.e., the opportunities for the application resources of each card-shaped area to be selected and used by the user are uniform, and the utilization rates of each type of the application resources are relatively uniform.

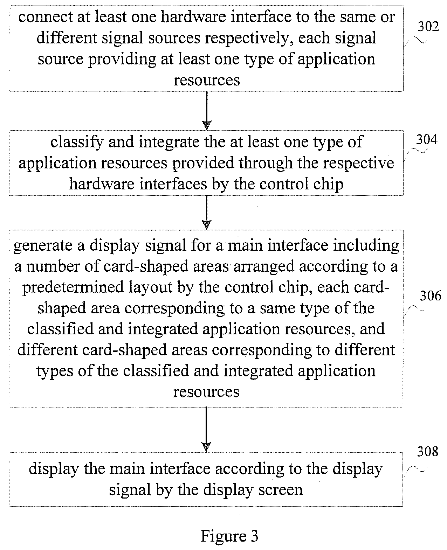

Referring to Figure 3, which illustrates a flowchart of a method for displaying resources provided by an embodiment of the present disclosure, the embodiment is described as applied to the electronic device shown in Figure 1 or 2 for an example. The method for displaying resources includes the following steps.

In step 302, at least one hardware interface is respectively connected to the same or different signal sources, in which each signal source is configured to provide at least one type of application resources.

In step 304, the at least one type of application resources provided through the respective hardware interfaces are classified and integrated by the control chip.

In step 306, a display signal for a main interface including a number of card-shaped areas arranged according to a predetermined layout is generated by the control chip, in which each card-shaped area corresponds to a same type of the classified and integrated application resources, and different card-shaped areas correspond to different types of the classified and integrated application resources.

In step 308, the main interface is displayed according to the display signal by the display screen.

In summary, the method for displaying resources provided by the present embodiment displays various types of application resources provided through different hardware interfaces by classifying and integrating them into different card-shaped areas of the main interface. Thereby, the following problem is solved, i.e., except for the TV application, other auxiliary applications are all provided through a menu on the smart TV and thus there are too many operation levels to go through to reach a certain auxiliary application, which results in rather low utilization rates of the applications except for the TV application. Meanwhile, the following effect is achieved, i.e., the operation levels required for using different applications in different card-shaped areas are the same, and thus the utilization rates of respective types of application resources are relatively uniform.

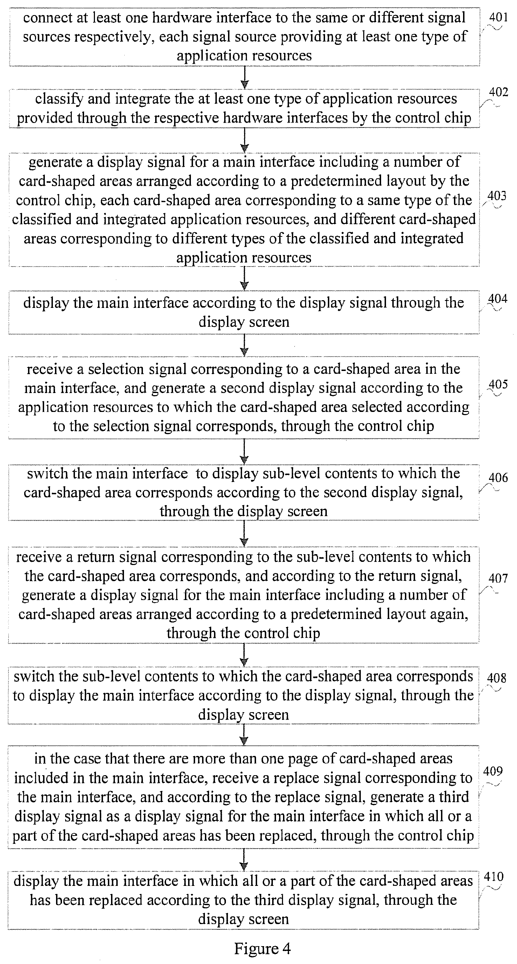

Referring to Figure 4, which illustrates a flowchart of a method for displaying resources according to another embodiment of the present disclosure, the embodiment is described as that the method for displaying resources is applied to the electronic device shown in Figure 1 or 2 for an example. The method for displaying resources includes the following steps.

In step 401, at least one hardware interface is respectively connected to the same or different signal sources, in which each signal source is configured to provide at least one type of application resources.

The electronic device is connected to the same or different signal sources through the at least one hardware interface.

The hardware interface includes at least one type of a TV interface, an HDMI interface, an S-Video interface, an AV (Audio and Video) interface, a VGA interface, a DVI interface, a DP interface, an USB interface and a network interface. The network interface further includes at least one type of a WIFI wireless network interface, a 3GPP network interface, an Ethernet wired network interface and an optical network interface.

The signal source includes at least one type of a TV cable, a high-definition player, a jukebox, a set-top box, a DVD/VCD, a computer, a tablet computer, a U disk, a game console and a remote server.

In step 402, the at least one type of application resources provided through the respective hardware interfaces are classified and integrated by the control chip.

The electronic device classifies and integrates the at least one type of application resources provided through the respective hardware interfaces through the control chip. This step may include the following sub steps.

The electronic device classifies the application resources provided through the TV interface into one type of application resources through the control chip when the hardware interface includes the TV interface.

When the hardware interface includes at least one of the HDMI interface, the S-Video interface, the AV interface, the VGA interface, the DVI interface, the DP interface and the USB interface, the electronic device, through the control chip, classifies the application resources provided through at least one of the HDMI interface, the S-Video interface, the AV interface, the VGA interface, the DVI interface, the DP interface and the USB interface respectively into one type of application resources, or classifies the application resources provided through at least one of the HDMI interface, the S-Video interface, the AV interface, the VGA interface, the DVI interface, the DP interface and the USB interface all into one type of application resources.

The electronic device classifies the application resources provided through the network interface into at least one type of application resources on basis of application type through the control chip when the hardware interface includes the network interface.

The types of the application resources include at least one type of TV application resources, local playback application resources, online movie and video application resources, game application resources, theme application resources, picture application resources, music application resources, system application resources, customized application resources running through a preset application interface, and third-party application resources running through a preset third-party application interface.

In step 403, a display signal for a main interface including a number of card-shaped areas arranged according to a predetermined layout is generated by the control chip, in which each card-shaped area corresponds to a same type of the classified and integrated application resources, and different card-shaped areas correspond to different types of the classified and integrated application resources.

The electronic device generates a display signal for a main interface including a number of card-shaped areas arranged according to a predetermined layout, through the control chip. This step may include the following sub steps.

When an application resource to which one card-shaped area corresponds exists, the electronic device determines contents to be displayed in the card-shaped area according to the application resources through the control chip. The contents to be displayed include at least one type of poster pictures, contents, introduction information and updated information of the application resources.

When an application resource to which one card-shaped area corresponds does not exist but a hardware interface to which the application resources corresponds is connected to a signal source, the electronic device determines contents to be displayed in the card-shaped area according to the signal source through the control chip. The contents to be displayed include at least one type of a connection status of the signal source, descriptive information of the signal source, a device type of the signal source, a device name of the signal source and an operating status of the signal source.

When an application resource to which one card-shaped area corresponds does not exist and a hardware interface to which the card-shaped area corresponds is not connected to a signal source, the electronic device determines contents to be displayed in the card-shaped area according to the hardware interface through the control chip. The contents to be displayed include at least one type of an interface type of the hardware interface and an unconnected status of the hardware interface.

In step 404, the main interface is displayed according to the display signal through the display screen.

The electronic device displays the main interface according to the display signal through the display screen.

In step 405, a selection signal corresponding to a card-shaped area in the main interface is received, and a second display signal is generated according to the application resources to which the card-shaped area selected according to the selection signal corresponds, through the control chip.

The electronic device also receives a selection signal corresponding to a card-shaped area in the main interface, and generates a second display signal according to the application resources to which the card-shaped area selected according to the selection signal corresponds, through the control chip.

In step 406, the main interface is switched to display sub-level contents to which the card-shaped area corresponds according to the second display signal, through the display screen.

The electronic device, through the display screen, switches the main interface to sub-level contents to which the card-shaped area corresponds according to the second display signal, to display. The sub-level contents include the application resources to which the card-shaped area corresponds, a list of the application resources to which the card-shaped area corresponds, or detailed information of the signal source to which the card-shaped area corresponds.

In step 407, a return signal corresponding to the sub-level contents to which the card-shaped area corresponds is received, and according to the return signal, a display signal for the main interface including a number of card-shaped areas arranged according to a predetermined layout is generated again, through the control chip.

The electronic device, through the control chip, receives a return signal corresponding to the sub-level contents to which the card-shaped area corresponds, and according to the return signal, generates again a display signal for the main interface including a number of card-shaped areas arranged according to a predetermined layout.

In step 408, the sub-level contents to which the card-shaped area corresponds is switched to display the main interface according to the display signal, through the display screen.

The electronic device, through the display screen, switches the sub-level contents to which the card-shaped area corresponds to the main interface to display, according to the display signal.

In step 409, in the case that there are more than one page of card-shaped areas included in the main interface, a replace signal corresponding to the main interface is received, and according to the replace signal, a third display signal is generated as a display signal for the main interface in which all or a part of the card-shaped areas has been replaced, through the control chip.

In the case that there are more than one page of card-shaped areas included in the main interface, the electronic device, through the control chip, receives a replace signal corresponding to the main interface, and according to the replace signal, generate a third display signal as a display signal for the main interface in which all or a part of the card-shaped areas has been replaced.

The replace signal is a page flip signal or a slide signal.

In step 410, the main interface in which all or a part of the card-shaped areas has been replaced is displayed according to the third display signal, through the display screen.

The electronic device, through the display screen, displays the main interface in which all or a part of the card-shaped areas has been replaced according to the third display signal.

It should be noted that the step 409 and the step 410 may be performed after the step 404, and the embodiment is described as the two steps performed after step 408 for an example.

In summary, the method for displaying resources provided by the present embodiment displays various types of application resources provided through different hardware interfaces by classifying and integrating them into different card-shaped areas of the main interface. Thereby, the following problem is solved, i.e., except for the TV application, other auxiliary applications are all provided through a menu on the smart TV and thus there are too many operation levels to go through to reach a certain auxiliary application, which results in rather low utilization rates of the applications except for the TV application. Meanwhile, the following effect is achieved, i.e., the operation levels required for using different applications in different card-shaped areas are the same, and thus the utilization rates of respective types of application resources are relatively uniform

Moreover, the electronic device provided by the present embodiment displays sub-level contents of a card-shaped area in the main interface after the card-shaped area is selected, and always returns to the main interface including a number of card-shaped areas when receiving a return signal in the condition that the sub-level contents are displayed. Thereby, the following effect is achieved, i.e., the opportunities for the application resources of each card-shaped area to be selected and used by the user are uniform, and the utilization rates of each type of the application resources are relatively uniform.

The serial numbers of the above embodiments of the present disclosure are only used for depiction, but not for indicating the superiority and inferiority of the embodiments.

It should be understood by those skilled in the art that, all or part of the steps of the above embodiments may be implemented through hardware, or through a program that instructs a related hardware. The program may be stored on a computer-readable storage medium which may be read-only memory, magnetic or optical disks.

The above depictions are only for the preferred embodiments of the present disclosure, which are not used to limit the present disclosure. Any variations, equivalent substitutions, and improvements made within the spirit and principles of the present disclosure shall be encompassed within the scope of the present disclosure.

## Claims

1. An electronic device, comprising:
at least one hardware interface connected to the same or different signal sources respectively, each of the signal sources providing at least one type of application resources through the hardware interface;
a control chip electrically connected to the at least one hardware interface, and being configured to classify and integrate the at least one type of application resources provided through the respective hardware interfaces, and generate a display signal for a main interface including a number of card-shaped areas arranged according to a predetermined layout, in which each card-shaped area corresponds to a same type of the classified and integrated application resources, and different card-shaped areas correspond to different types of the classified and integrated application resources; and
a display screen electrically connected to the control chip and displaying the main interface according to the display signal.

2. The electronic device according to claim 1, wherein
the control chip is configured to classify the application resources provided through a TV interface into one type of application resources when the hardware interface includes the TV interface;
the control chip is configured to classify the application resources provided through at least one interface of an HDMI interface, an S-Video interface, an AV interface, a VGA interface, a DVI interface, a DP interface and a USB interface respectively into one type of application resources, or classify the application resources provided through at least one interface of the HDMI interface, the S-Video interface, the AV interface, the VGA interface, the DVI interface, the DP interface and the USB interface all into one type of application resources, when the hardware interface includes at least one of the HDMI interface, the S-Video interface, the AV interface, the VGA interface, the DVI interface, the DP interface and the USB interface; and
the control chip is configured to classify the application resources provided through a network interface into at least one type of application resources on basis of application type when the hardware interface includes the network interface,
wherein the types of the application resources include at least one type of TV application resources, local playback application resources, online movie and video application resources, game application resources, theme application resources, picture application resources, music application resources, system application resources, customized application resources running through a preset application interface, and third-party application resources running through a preset third-party application interface.

3. The electronic device according to claim 2, wherein
the control chip is configured, when an application resource to which one card-shaped area corresponds exists, to determine contents to be displayed in this card-shaped area according to this application resource, in which the contents to be displayed include at least one type of poster pictures, contents, an introduction information and an updated information of the application resources;
the control chip is configured, when an application resource to which one card-shaped area corresponds does not exist but a hardware interface to which this application resource corresponds is connected to a signal source, to determine contents to be displayed in this card-shaped area according to the signal source, in which the contents to be displayed include at least one of a connection status of the signal source, a descriptive information of the signal source, a device type of the signal source, a device name of the signal source and an operating status of the signal source; and
the control chip is configured, when an application resource to which one card-shaped area corresponds does not exist and a hardware interface to which this card-shaped area corresponds is not connected to a signal source, to determine contents to be displayed in this card-shaped area according to this hardware interface, in which the contents to be displayed include at least one of an interface type of the hardware interface and an unconnected status of the hardware interface.

4. The electronic device according to claim 2 or 3, wherein
the control chip is further configured to receive a selection signal corresponding to a card-shaped area in the main interface, and generate a second display signal according to the application resource to which the card-shaped area selected according to the selection signal corresponds; and
the display screen is further configured to switch the main interface to display a sub-level contents to which the card-shaped area corresponds according to the second display signal, in which the sub-level contents include the application resources to which the card-shaped area corresponds, a list of the application resources to which the card-shaped area corresponds, or detailed information of the signal source to which the card-shaped area corresponds.

5. The electronic device according to claim 4, wherein
the control chip is further configured to receive a return signal corresponding to the sub-level contents to which the card-shaped area corresponds, and according to the return signal, generate again a display signal for the main interface including a number of card-shaped areas arranged according to a predetermined layout; and
the display screen is further configured to switch the sub-level contents to which the card-shaped area corresponds to the main interface and display the main interface according to the display signal.

6. The electronic device according to claim 2 or 3, wherein
the control chip is further configured, when there are more than one page of card-shaped areas included in the main interface, to receive a replace signal corresponding to the main interface, and generate a third display signal as a display signal for the main interface in which all or a part of the card-shaped areas has been replaced according to the replace signal; and
the display screen is further configured to display the main interface in which all or a part of the card-shaped areas has been replaced according to the third display signal;
wherein the replace signal is a page flip signal or a slide signal.

7. The electronic device according to claim 1, 2, 3 or 5, wherein the signal source includes at least one type of a TV cable, a high-definition player, a jukebox, a set-top box, a DVD/VCD, a computer, a tablet computer, a U disk, a game console, and a remote server.

8. A method for displaying resources, wherein the method is applied to the electronic device according to any one of claims 1 to 7, the method comprises:
connecting to the same or different signal sources through the at least one hardware interface respectively, each signal source providing at least one type of application resources;
classifying and integrating the at least one type of application resources provided through the respective hardware interfaces through the control chip;
generating a display signal for a main interface including a number of card-shaped areas arranged according to a predetermined layout through the control chip, in which each card-shaped area corresponds to a same type of the classified and integrated application resources, and different card-shaped areas correspond to different types of the classified and integrated application resources; and
displaying the main interface according to the display signal through the display screen.

9. The method according to claim 8, wherein the classifying and integrating the at least one type of application resources provided through the respective hardware interfaces through the control chip comprises:
classifying the application resource provided through a TV interface into one type of application resources through the control chip when the hardware interface includes the TV interface;
classifying the application resource provided through at least one interface of an HDMI interface, an S-Video interface, an AV interface, a VGA interface, a DVI interface, a DP interface and a USB interface respectively into one type of application resources, or classifying the application resource provided through at least one interface of the HDMI interface, the S-Video interface, the AV interface, the VGA interface, the DVI interface, the DP interface and the USB interface all into one type of application resources, through the control chip, when the hardware interface includes at least one of the HDMI interface, the S-Video interface, the AV interface, the VGA interface, the DVI interface, the DP interface and the USB interface; and
classifying the application resource provided through a network interface into at least one type of application resources on basis of application type through the control chip when the hardware interface includes the network interface;
wherein the types of the application resources include at least one type of TV application resources, local playback application resources, online movie and video application resources, game application resources, theme application resources, picture application resources, music application resources, system application resources, customized application resources running through a preset application interface, and third-party application resources running through a preset third-party application interface.

10. The method according to claim 9, wherein the generating the display signal for the main interface including a number of card-shaped areas arranged according to the predetermined layout through the control chip comprises:
when an application resource to which one card-shaped area corresponds exists, determining contents to be displayed in this card-shaped area according to the application resource through the control chip, in which the contents to be displayed include at least one type of poster pictures, contents, an introduction information and an updated information of the application resource;
when an application resource to which one card-shaped area corresponds does not exist but a hardware interface to which the application resource corresponds is connected to a signal source, determining contents to be displayed in this card-shaped area according to the signal source through the control chip, in which the contents to be displayed include at least one type of a connection status of the signal source, a descriptive information of the signal source, a device type of the signal source, a device name of the signal source and an operating status of the signal source; and
when an application resource to which one card-shaped area corresponds does not exist and a hardware interface to which the card-shaped area corresponds is not connected to a signal source through the control chip, determining contents to be displayed in this card-shaped area according to the hardware interface, in which the contents to be displayed include at least one type of an interface type of the hardware interface and an unconnected status of the hardware interface.

11. The method according to claim 9 or 10, further comprising:
receiving a selection signal corresponding to a card-shaped area in the main interface, and generating a second display signal according to the application resource to which the card-shaped area selected according to the selection signal corresponds, through the control chip;
switching the main interface to display a sub-level contents to which the card-shaped area corresponds according to the second display signal through the display screen, in which the sub-level contents include the application resources to which the card-shaped area corresponds, a list of the application resources to which the card-shaped area corresponds, or a detailed information of the signal source to which the card-shaped area corresponds.

12. The method according to claim 11, further comprising:
receiving a return signal corresponding to the sub-level contents to which the card-shaped area corresponds, and according to the return signal, generating again a display signal for the main interface including a number of card-shaped areas arranged according to a predetermined layout, through the control chip; and
switching the sub-level contents to which the card-shaped area corresponds to the main interface and displaying the sub-level contents according to the display signal, through the display screen.

13. The method according to claim 9 or 10, further comprising:
receiving a replace signal corresponding to the main interface, and according to the replace signal, generating a third display signal as a display signal for the main interface in which all or a part of the card-shaped areas has been replaced, through the control chip, in the case that there are more than one page of card-shaped areas included in the main interface;
displaying the main interface in which all or a part of the card-shaped areas has been replaced according to the third display signal, through the display screen;
wherein the replace signal is a page flip signal or a slide signal.

14. The method according to claim 8, 9, 10 or 12, wherein the signal source includes at least one type of a TV cable, a high-definition player, a jukebox, a set-top box, a DVD/VCD, a computer, a tablet computer, a U disk, a game console, and a remote server.
